# EUROPEAN PATENT SPECIFICATION

(11) **EP 3 144 749 B1**
(45) Date of publication and mention of the grant of the patent: **25.11.2020**
(21) Application number: 14891950.9
(22) Date of filing: 12.05.2014
(51) Int. Cl.: G05B 9/02, G05B 23/02, G01R 23/02

(54) **TIME-SERIES DATA PROCESSING DEVICE AND TIME-SERIES DATA PROCESSING PROGRAM**
VORRICHTUNG ZUR VERARBEITUNG VON ZEITREIHENDATEN UND PROGRAMM ZUR VERARBEITUNG VON ZEITREIHENDATEN
DISPOSITIF DE TRAITEMENT DE DONNÉES CHRONOLOGIQUES ET PROGRAMME DE TRAITEMENT DE DONNÉES CHRONOLOGIQUES

(43) Date of publication of application: 22.03.2017
(73) Proprietor: Mitsubishi Electric Corporation, Chiyoda-ku Tokyo 100-8310 (JP)
(72) Inventor: IMAMURA, Makoto, Tokyo 100-8310 (JP); NAKAMURA, Takaaki, Tokyo 100-8310 (JP)
(74) Representative: Pfenning, Meinig & Partner mbB
(86) International application number: PCT/JP2014/062594
(87) International publication number: WO 2015/173860

(56) References cited:
- JP-A- 2007 264 720
- JP-A- 2007 264 720
- JP-A- 2012 128 583
- JP-A- 2012 128 583
- US-A1- 2010 295 537
- TOMOYA FUJINO ET AL.: 'A Method for Similarity-Based Search in Time- Series Sensor Data' FIT2009 DAI 8 KAI FORUM ON INFORMATION TECHNOLOGY KOEN RONBUNSHU vol. 1, 20 August 2009, pages 295 - 296, XP055236364
- FINK E ET AL: "Indexing of time series by major minima and maxima", SYSTEMS, MAN AND CYBERNETICS, 2003. IEEE INTERNATIONAL CONFERENCE ON; [IEEE INTERNATIONAL CONFERENCE ON SYSTEMS, MAN, AND CYBERNETICS], IEEE, PISCATAWAY, NJ, USA, vol. 3, 5 October 2003 (2003-10-05), pages 2332-2335, XP010667966, DOI: 10.1109/ICSMC.2003.1244232 ISBN: 978-0-7803-7952-7
- E. Fin, B. P. Kevin: "Indexing of Compressed Time series" In: "DATA MINING IN TIME SERIES DATABASES", 1 January 2004 (2004-01-01), World Scientific pages 43-65, * Section 5 *

## Description

### Technical Field

The present invention relates to a technique for detecting an abnormality in fluctuations in data such as a sensor value of a control system at a plant, building, factory, or the like, a stock price, or sales.

### Background Art

In a power generation plant such as a thermal power power plant, a hydroelectric power plant, and nuclear power plant, a chemical plant, a steel plant, a water and sewage plant, and so on, a control system for controlling the plant process has been employed. In facilities such as a building, a factory, and the like, a control system for air conditioning, electricity, lighting, water supply and drainage, and so on has been employed. In such a control system, various types of time-series data obtained over time by a sensor attached to a device are accumulated.

Likewise, in an information system concerning economy and business administration, time-series data are accumulated where a value such as a stock price or sales is recorded over time.

An abnormality and the like in the state of the plant, facilities, business, and the like are detected by analyzing a change in value of such time-series data. Particularly, an abnormality and the like are detected by obtaining the vibration count of vertical vibration of the value of the time-series data.

Where the time-series data is a signal such as electricity, it is known that the vibration count of the vertical vibration of the value of the time-series data can be obtained by a scheme employing Fourier transform.

Patent Literature 1 describes a method of detecting the vertical vibration from the vertical deviation of time-series data from the average value. Fink et al.: "Indexing of Compressed Time Series", in: "Data Mining in Time Series Databases", 2004, World Scientific, pages 43 - 65, discusses a procedure for identifying major minima and maxima in a time series using fast compression of the series and indexing the compressed series by the major extrema.
Fink et al.: "Indexing of Time Series by Major Minima and Maxima", 2003, XP10667966, discusses a technique for fast compression of time series and indexing of compressed series based on major inclines and major declines of the time series.

### Citation List

### Patent Literature

Patent Literature 1: JP 2007-264720

### Summary of Invention

### Technical Problem

With the scheme employing Fourier transform, it is sometimes difficult to obtain the vibration count of time-series data such as temperature, pressure, or the like which changes slowly, time-series data such as a stock price which is difficult to express by lapping frequencies determined by a physical law, and so on.

With the method described in Patent Literature 1, the vertical vibration cannot be detected if the vertical deviation width from the average value is not uniform (for example, the average value is deviated downward due to the presence of a very low value) and if the average value does not converge (for example, while the value vibrates vertically, the average value continues to decrease).

It is an objective of the present invention to enable detection of a change in a value such as the vertical vibration of the value of time-series data more accurately, so that an abnormality and the like can be detected accurately.

### Solution to Problem

The invention is defined by the appended claims.

### Advantageous Effects of Invention

A time-series data processing device according to the present invention extracts an extension leg from time-series data and identifies the appearance patterns of an extension rising leg and extension falling leg from the extracted extension leg. This enables detection of a change in time-series data accurately, so that an abnormality and the like can be detected accurately.

### Brief Description of Drawings

Fig. 1 is a configuration diagram of a time-series data processing device 10 according to Embodiment 1.
Fig. 2 presents explanatory diagrams of time-series data.
Fig. 3 presents explanatory diagrams of legs.
Fig. 4 presents explanatory diagrams of maximums.
Fig. 5 presents explanatory diagrams of leg lists.
Fig. 6 presents explanatory diagrams of a vibration path and vibration count.
Fig. 7 presents explanatory diagrams of a terminal time point leftmost vibration path.
Fig. 8 presents explanatory diagrams of the amplitude with respect to the vibration path and vibration count.
Fig. 9 presents explanatory diagrams of vertical vibration detection of when the vertical vibration widths from an average value are not uniform.
Fig. 10 presents explanatory diagrams of vertical vibration detection of when the average value does not converge.
Fig. 11 is a flowchart illustrating the processing of the time-series data processing device 10 according to Embodiment 1.
Fig. 12 is a diagram illustrating the specific contents of a right-maximization process and a new leg registration process in the processing of Fig. 11.
Fig. 13 is a diagram illustrating the specific contents of an amplitude checking process and a left-maximization process in the processing of Fig. 11.
Fig. 14 is a diagram illustrating an example of a hardware configuration of the time-series data processing device 10 presented in Embodiment 1.

### Description of Embodiments

### Embodiment 1.

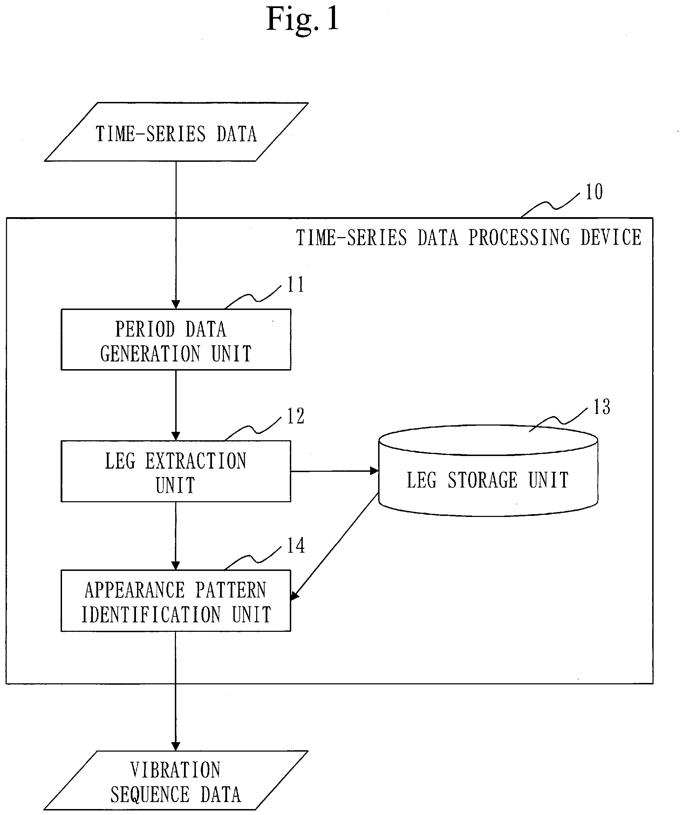

Fig. 1 is a configuration diagram of a time-series data processing device 10 according to Embodiment 1.

The time-series data processing device 10 takes as input time-series data being a sequence of values obtained by sequential observation over time, detects vertical vibration of the values of the time-series data, and outputs vibration sequence data indicating the detected vertical vibration.

The time-series data processing device 10 is provided with a period data generation unit 11, a leg extraction unit 12, a leg storage unit 13, and an appearance pattern identification unit 14.

When a new value of the time-series data arrives, the period data generation unit 11 segments subsequence data of a past predetermined period (to be referred to as time window hereinafter) which precedes the arrival time point.

The leg extraction unit 12 takes as input the subsequence data segmented from the time-series data by the period data generation unit 11 and extracts subsequence data which is segmented from the subsequence data and whose value is higher or lower at the terminal point than at the start point, as an extension leg.

The leg storage unit 13 is a storage device which stores the extension leg extracted by the leg extraction unit 12, as a leg list.

The appearance pattern identification unit 14 generates the vibration sequence data by identifying, from the extension leg stored in the leg storage unit 13, an appearance pattern in which an extension rising leg whose value increases over time and an extension falling leg whose value decreases over time appear alternately over time. The appearance pattern identification unit 14 outputs the vibration sequence data.

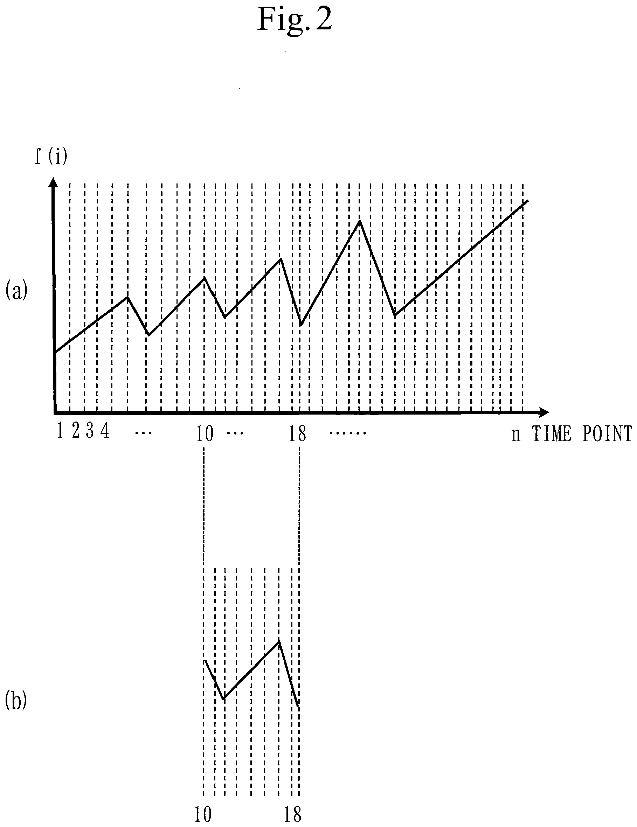

Fig. 2 presents explanatory diagrams of the time-series data.

The time-series data is a real-value order list f[a : b] = {f(a), f(a + 1), ..., f(b - 1), f(b)} where f is the name of a data item, f(i) is the value of the data item f at a time point i, and a and b are integers satisfying a ≤ b. Note that b - a + 1 will be called the length of time-series data f[a : b].

The subsequence data of the time-series data f[a : b] is a real-value order list f[L : M] = {f(L), f(L + 1), ..., f(M)} where L and M are integers satisfying a ≤ L ≤ M ≤ b. Note that M - L + 1 will be called the length of the subsequence data f[L : M].

Referring to Fig. 2, (a) indicates the time-series data in which the axis of ordinate represents the value of the time-series data and the axis of abscissa represents the time point. Note that (a) indicates a real-value order list f[1 : n] as the time-series data, and (b) indicates subsequence data f[10 : 18], being obtained when L = 10 and M = 18, of the time-series data indicated by (a) of Fig. 2.

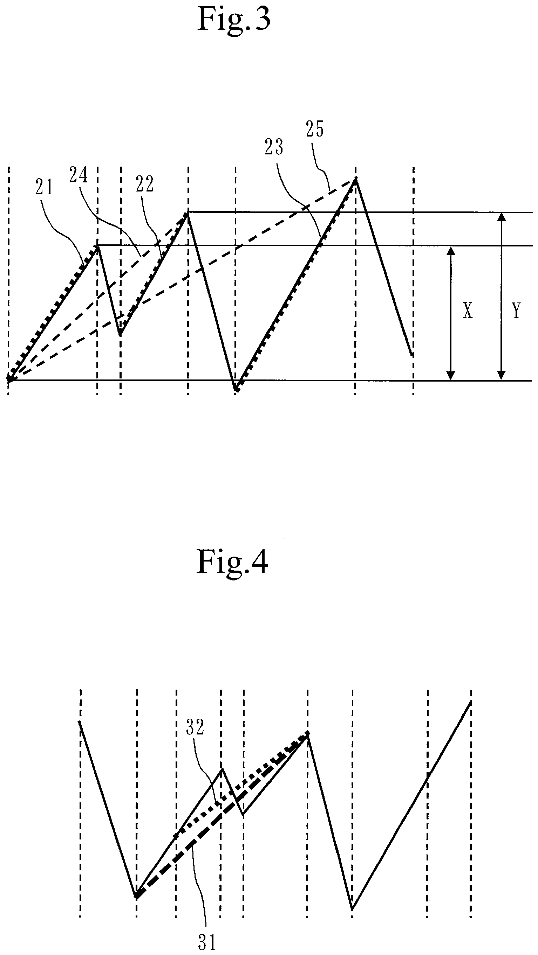

Fig. 3 presents explanatory diagrams of the legs.

The legs include a rising leg and a falling leg.

The rising leg is subsequence data f[L : M] satisfying f(L) ≤ f(i) ≤ f(i + 1) ≤ f(M) for every i that satisfies L < i < M. Likewise, the falling leg is subsequence data f[L : M] satisfying f(L) ≥ f(i) ≥ f(i + 1) ≥ f(M) for every i that satisfies L < i < M.

An extension leg is obtained by extended leg definition. The extension leg includes an extension rising leg obtained by extended rising leg definition and an extension falling leg obtained by extended falling leg definition.

The extension rising leg is subsequence data f[L : M] satisfying f(L) ≤ f(i) ≤ f(M) for every i that satisfies L ≤ i ≤ M. Unlike the rising leg, the extension rising leg does not necessarily satisfy f(i) ≤ f(i + 1). Likewise, the extension falling leg is subsequence data f[L : M] satisfying f(L) ≥ f(i) ≥ f(M) for every i that satisfies L ≤ i ≤ M. Unlike the falling leg, the extension falling leg does not necessarily satisfy f(i) ≥ f(i + 1).

In Fig. 3, broken lines 21, 22, and 23 express rising legs. A broken line 24 expresses an extension rising leg, although it does not express a rising leg because it does not satisfy f(i) ≤ f(i + 1) at a certain time point. A broken line 25 does not express an extension rising leg because it does not satisfy f(L) ≤ f(i) at a certain time point.

The difference (Max_{L≤i≤M}f(i) - min_{L≤i≤M}f(i)) between the maximum value and minimum value of the values of the data item f in the leg will be called an amplitude of the leg. For example, in Fig. 3, the amplitude of the rising leg expressed by the broken line 21 is X, and the amplitude of the extension rising leg expressed by the broken line 24 is Y.

Fig. 4 presents explanatory diagrams of maximums.

A left maximum and right maximum are defined for the extension rising leg and extension falling leg.

A left-maximum extension rising leg f[L : M] is an extension rising leg not satisfying f(L - 1) ≤ f(L). Namely, the left-maximum extension rising leg f[L : M] satisfies f(L - 1) > f(L). A right-maximum extension rising leg f[L : M] is an extension rising leg not satisfying f(M) ≤ f(M + 1). Namely, the right-maximum extension rising leg f[L : M] satisfies f(M) > f(M + 1).

Likewise, a left-maximum extension falling leg f[L : M] is an extension falling leg satisfying f(L - 1) < f(L). A right-maximum extension falling leg f[L : M] is an extension falling leg satisfying f(M) < f(M + 1).

In Fig. 4, broken lines 31 and 32 express extension rising legs. The extension rising leg expressed by the broken line 31 is left maximum and right maximum. The extension rising leg expressed by the broken line 32 is right maximum but is not left maximum because it does not satisfy f(L - 1) > f(L).

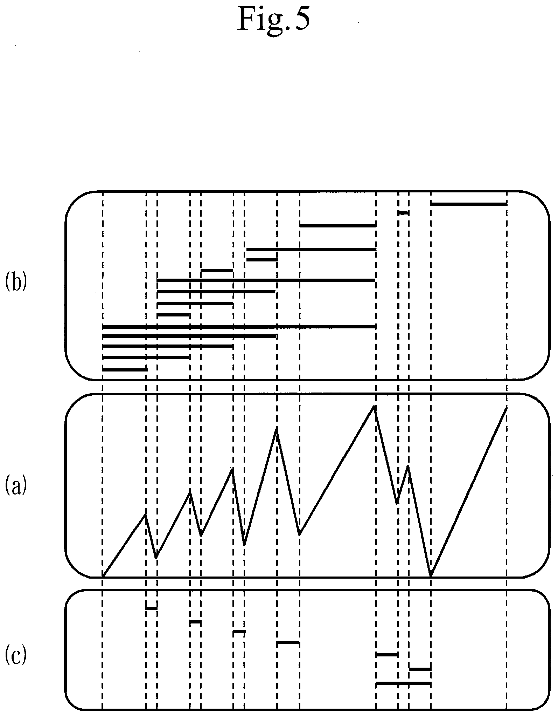

Fig. 5 presents explanatory diagrams of leg lists.

Referring to Fig. 5, (a) presents a diagram illustrating subsequence data; (b) presents a list illustrating a time segment where the leg is a left-maximum, right-maximum extension rising leg extracted from the subsequence data indicated by (a); and (c) presents a list illustrating a time segment where the leg is a left-maximum, right-maximum extension falling leg extracted from the subsequence data indicated by (a).

As indicated in (b) and (c), the leg extraction unit 12 extracts the left-maximum, right-maximum extension rising leg and the left-maximum, right-maximum extension falling leg and stores them in the leg storage unit 13 as the leg lists.

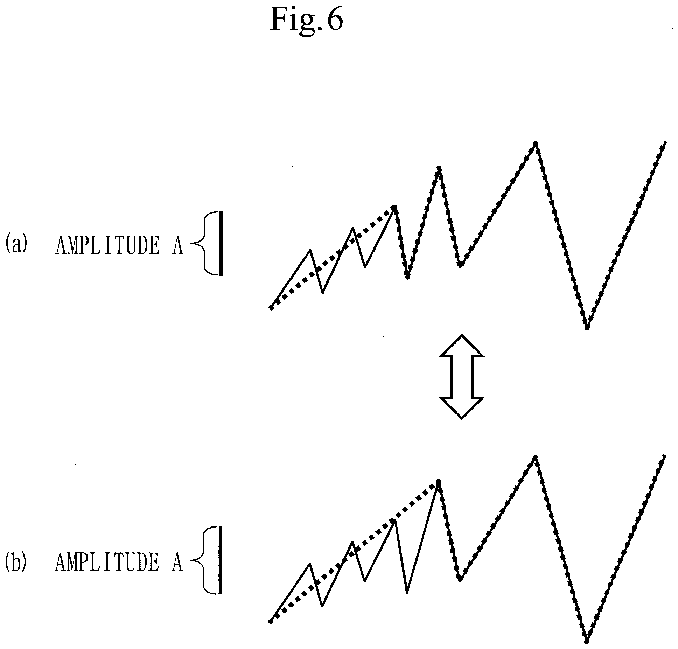

Fig. 6 presents explanatory diagrams of a vibration path and vibration count.

When an amplitude A (rising threshold and falling threshold) is given, an order list f[L₁ : M₁], f[L₂ : M₂], ..., f[Lₙ : Mₙ] of an extension leg in which an extension rising leg and extension falling leg each having an amplitude A or more will be called a vibration path. A length n of the order list of the vibration path is defined as the vibration count of the vibration path where L₁ < M₁ ≤ L₂ < M₂, ..., < Lₙ ≤ Mₙ is satisfied.

Not a simple leg but an extension leg is used in the vibration path in order to disregard a fluctuation having a smaller width than the given amplitude.

When time-series data f[L : M], a time window W, and the amplitude A are given, for each i satisfying L ≤ i ≤ M - W + 1, in subsequence data f[i: i + W - 1], a set of vibration counts of vibration paths each having an amplitude A or more with which the vibration count becomes the maximum will be called vibration sequence data g[L : M - W + 1]. Namely, the vibration sequence data represents the vibration count of each time window.

Referring to Fig. 6, (a) and (b) present the same subsequence data. In each of (a) and (b), a vibration path having an amplitude A or more is expressed by a broken line. If extension legs are chosen as illustrated in (a) to constitute the vibration path, the vibration count is 7. If extension legs are chosen as illustrated in (b) to constitute the vibration path, the vibration count is 5. In this manner, the vibration count of the vibration path differs depending on the choice of the extension legs. Hence, in the vibration sequence data, a vibration path with which the vibration count of the vibration path becomes the maximum is employed so that the vibration count does not change depending on the choice of the extension legs.

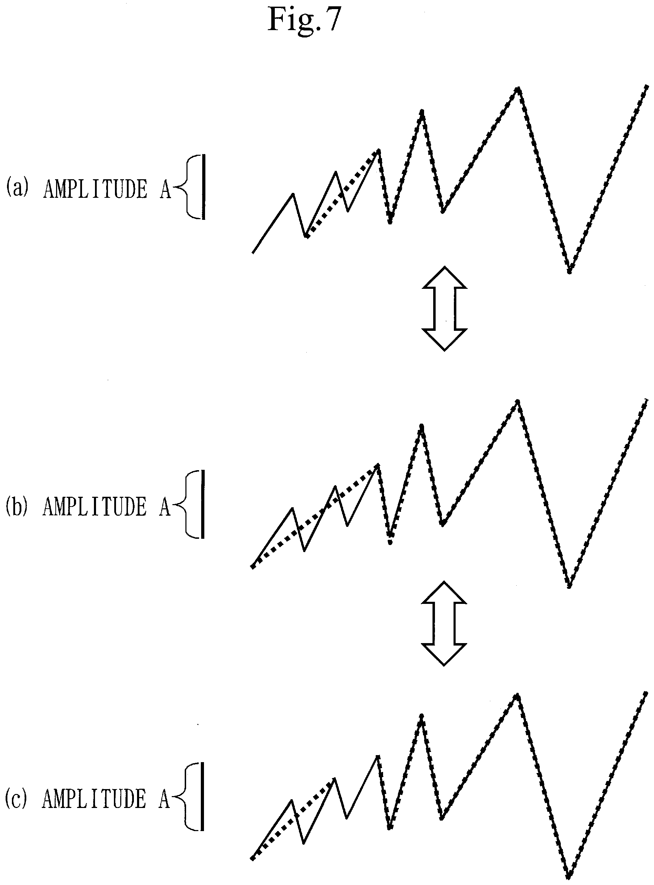

Fig. 7 presents explanatory diagrams of a terminal time point leftmost vibration path.

Referring to Fig. 7, (a), (b), and (c) present the same subsequence data. In each of (a), (b), and (c), a vibration path having an amplitude A or more is expressed by a broken line. In (a), (b), and (c), different extension legs are chosen to constitute the individual vibration paths. The vibration count of the vibration path constituted by the extension legs chosen in each of (a), (b), and (c) is 7, which is the maximum. Namely, there may be a plurality of choices for extension legs with which the vibration count becomes the maximum.

In (c), extension legs each having an amplitude A or more are chosen to come more to the left (with a higher priority to a leg having an earlier start point) to constitute the vibration path. In this manner, a vibration path constituted of extension legs chosen with a higher priority to an extension leg having an earlier terminal point will be called a terminal time point leftmost vibration path. The terminal time point leftmost vibration path has the maximum vibration count.

More precisely, f[L₁ : M₁], f[L₂ : M₂], ..., I[Lᵢ : Mᵢ], ..., f[Lₙ : Mₙ] is assumed as a vibration path P in which an extension rising leg and an extension falling leg each having an amplitude A or more appear alternately. When individual f[Lᵢ : Mᵢ] satisfy Mᵢ₋₁ ≤ Lᵢ, have an amplitude A or more, and are chosen such that Mᵢ corresponds to the earliest time point among f[Lᵢ : Mᵢ], the vibration path P is a terminal time point leftmost vibration path.

How the vibration count of the terminal time point leftmost vibration path becomes the maximum will be described.

The top of a vibration path is either an extension rising leg or a falling extension leg. A case will be described where the extension leg at the top of a path with which the the vibration count becomes the maximum is an extension rising leg. The same explanation applies to a case where the extension leg at the top is a falling extension leg.

First, a terminal time point leftmost vibration path which starts with an extension rising leg is expressed as f[L₁ : M₁], f[L₂ : M₂], ..., f[Lₙ : Mₙ]. Assume that a vibration path P' (f[L₁' : M₁'], f[L₂' : M₂'], ..., f[Lₙ' : Mₙ']) having an amplitude A exists which starts with an extension rising leg f[L₁' : M₁'] at a time point L₁' being located after (on the right side of) L₁ and with which the vibration count becomes the maximum. Then, a vibration path in which the extension rising leg f[L₁' : M₁'] is replaced with an extension rising leg f[L₁ : M₁] also forms a vibration path having an amplitude A. The vibration count of the vibration path after replacement is the same as that of the vibration path P'. This teaches that vibration paths that start with f[L₁ : M₁] include one with which the vibration count becomes the maximum.

Likewise, assume that a vibration path P" (f[L : M], [L₂" : M₂"], [L₃ : M₃], ..., f[Lₙ" : Mₙ"]) having an amplitude A exists which starts with an extension leg f[L₁ : M₁], [L₂" : M₂"] at a time point L₂" being located after L₂ and with which the vibration count becomes the maximum. Then, a vibration path in which the extension rising leg [L₂" : M₂"] is replaced with an extension rising leg [L₂ : M₂] also forms a vibration path having an amplitude A. The vibration count of the vibration path after replacement is the same as that of the vibration path P". This teaches that vibration paths that start with f[L₁ : M₁], f[L₂ : M₂] include a vibration path with which the vibration count becomes the maximum.

Since n is finite and Lᵢ is larger than Lᵢ₋₁, if this procedure is executed recursively, the procedure stops within n steps. This therefore teaches that the terminal time point leftmost vibration path is a vibration path having an amplitude A with which the wave count becomes the maximum.

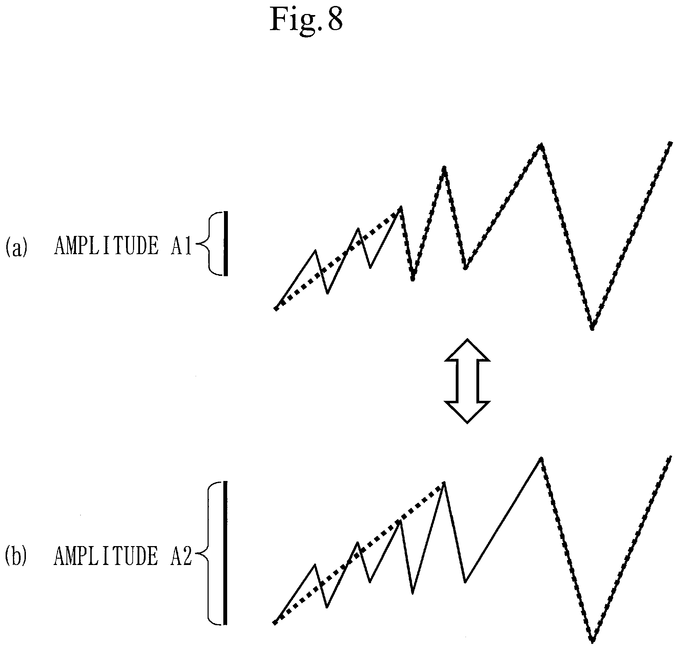

Fig. 8 presents explanatory diagrams of the amplitude with respect to the vibration path and vibration count.

In Fig. 8, (a) and (b) present the same subsequence data; in (a), a vibration path having an amplitude A1 or more is expressed by a broken line, and in (b), a vibration path having an amplitude A2 or more is expressed by a broken line. In (a), the vibration count is 7, while in (b), the vibration count is 3. In this manner, the vibration path as well as the vibration count differs depending on the amplitude.

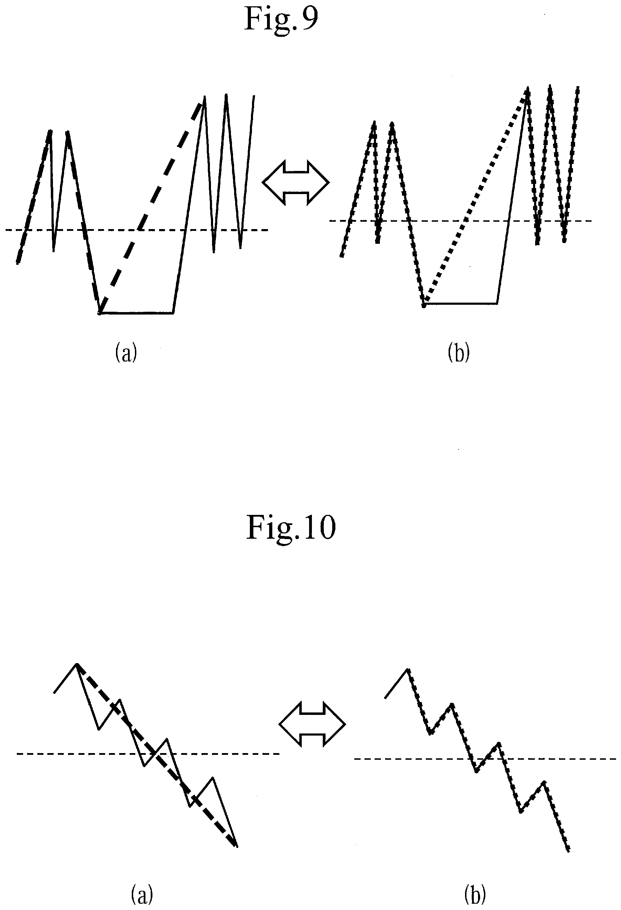

Fig. 9 presents explanatory diagrams of vertical vibration detection of when the vertical displacement widths from an average value are not uniform.

As an example of non-uniform vertical displacement widths from the average, Fig. 9 presents a case where the average value is deviated downward due to the presence of a very low value. When detecting vertical vibration by treating the vertical displacement from the average value of time-series data as an amplitude, the vertical vibration is detected as illustrated in (a) with a vibration count of 3. When detecting the terminal time point leftmost vibration path described above, it is detected as illustrated in (b) with a vibration count of 9.

Fig. 10 presents explanatory diagrams of vertical vibration detection of when the average value does not converge.

As an example of a non-converging average value, Fig. 10 presents a case where the average value decreases while the value vertically vibrates. When detecting vertical vibration by treating the vertical displacement from the average value of the time-series data as the amplitude, the vertical vibration is detected as illustrated in (a) with a vibration count of 1. When detecting the terminal time point leftmost vibration path described above, it is detected as illustrated in (b) with a vibration count of 7.

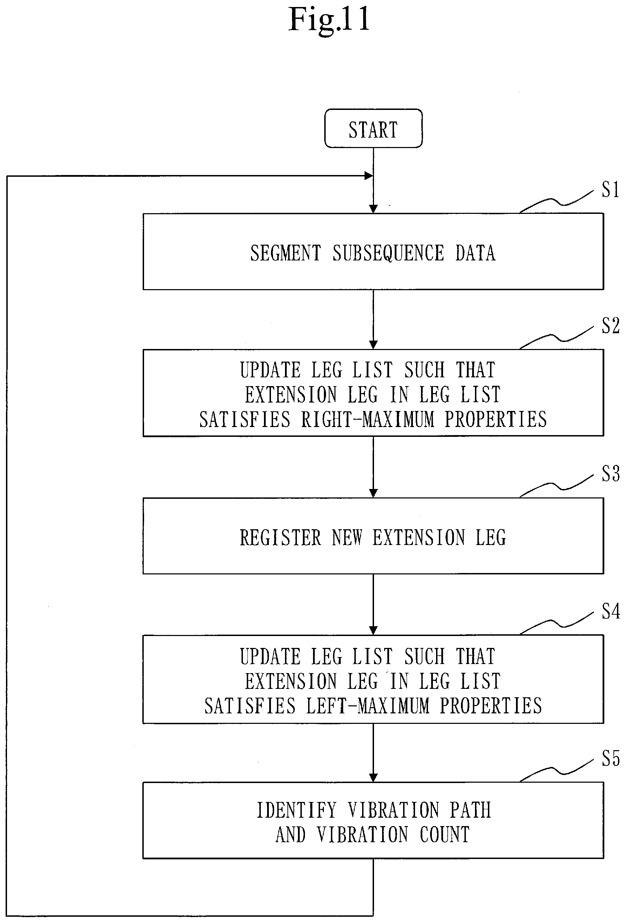

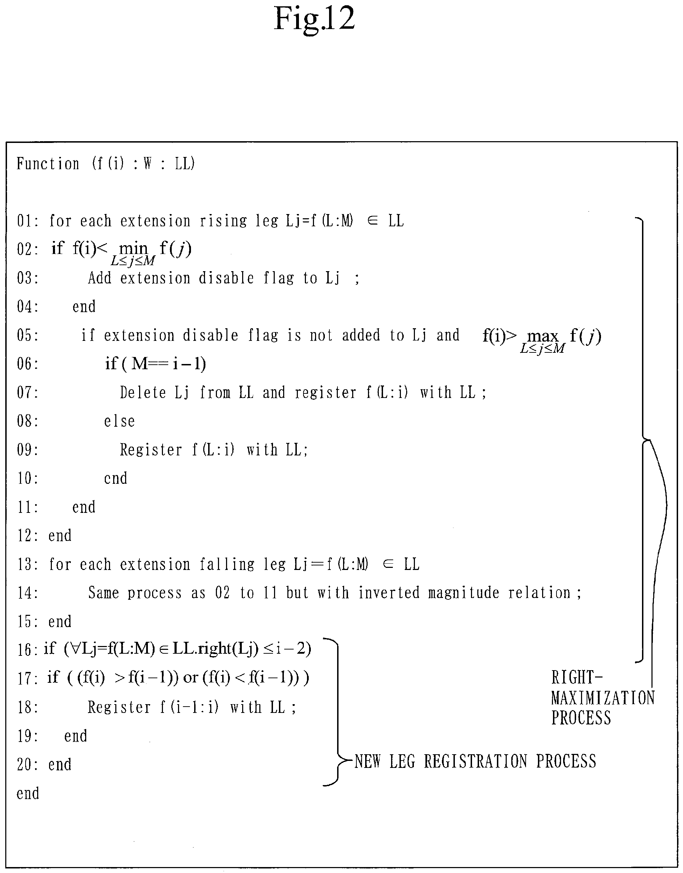

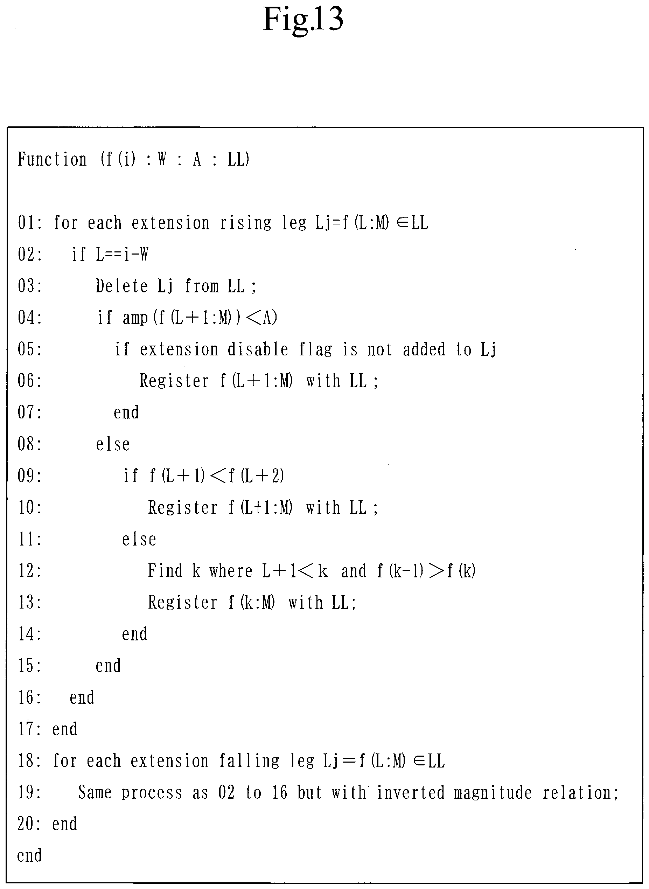

Fig. 11 is a flowchart illustrating the processing of the time-series data processing device 10 according to Embodiment 1. Fig. 12 is a diagram illustrating the specific contents of a right-maximization process and a new leg registration process in the processing of Fig. 11. Fig. 13 is a diagram illustrating the specific contents of a left-maximization process in the processing of Fig. 11.

Note that time-series data f(1 : i - 1), a time window W, and an amplitude A are given as input.

### (S1: Subsequence Data Generation Process)

When a new value of the time-series data arrives, the period data generation unit 11 segments subsequence data of the past time window W which precedes the arrival time point.

With the new arrival time point being defined as i, subsequence data f(i - W + 1 : i) of from a time point i - W + 1 to a time point i is segmented. For example, where the time window W is 20-minute long, when the value of 10 o'clock 20 minutes arrives, subsequence data f(10 o'clock 1 minute : 10 o'clock 20 minutes) of from 10 o'clock 1 minute to 10 o'clock 20 minutes is segmented.

### (S2: Right-Maximization Process)

The leg extraction unit 12 takes as input a value f(i) and a leg list LL which is stored in the leg storage unit 13 and updates the leg list LL such that each extension leg in the leg list LL satisfies the right-maximum properties.

In Fig. 12, line 01 to line 15 indicate the contents of right-maximization process, in which line 01 to line 12 indicate the contents of the processing for the extension rising leg and line 13 to line 15 indicate the processing for the extension falling leg. The actual processing for the extension falling leg is not described because it is the same as the processing for the extension rising leg except for value comparison.

The leg extraction unit 12 extracts extension rising legs Lj = f(L : M) from the leg list LL sequentially and executes the process of line 02 to line 11 as follows for each extracted extension rising leg Lj (line 01).

First, the leg extraction unit 12 checks whether or not the value f(i) is lower than the minimum value of the extension rising leg Lj (line 02). If true in line 02, the extension rising leg Lj will not extend rightward whatever the value of the time-series data that may arrive in the future. Thus, the leg extraction unit 12 adds an extension disable flag to the extension rising leg Lj (line 03). Then, an if sentence starting at line 02 ends (line 04).

Then, the leg extraction unit 12 checks whether or not no extension disable flag is added to the extension rising leg Lj and whether or not the value f(i) is higher than the maximum value of the extension rising leg Lj (line 05). If true in Line 05, the leg extraction unit 12 checks whether or not M being the terminal point of the extension rising leg Lj is a time point preceding by one the time point i of the new arrival (line 06). If true in line 06, the extension rising leg Lj is no longer right-maximum. Thus, the leg extraction unit 12 deletes the extension rising leg Lj from the leg list LL, and instead registers f(L : i) in which the terminal point is extended to a time point i, with the leg list LL (line 07). If false in line 06 (line 08), the extension rising leg Lj is right-maximum. Thus, while leaving the extension rising leg Lj in the leg list LL, the leg extraction unit 12 registers f(L : i) with the leg list LL independently of the extension rising leg Lj (line 09). Then, if sentences starting at line 05 and 06 end (lines 10 to 11).

When the process of line 02 to line 11 for every extension rising leg Lj registered with the leg list LL ends, a **for** sentence starting at line 01 ends (line 12).

Subsequently, the leg extraction unit 12 executes a process for the extension falling leg (lines 13 to 15). As described above, the process for the extension falling leg is almost the same as the process for the extension rising leg, and its detailed description will accordingly be omitted. In the process for the extension falling leg, "f(i) < min_{L≤i≤M}f(i)" in line 02 in the process for the extension rising leg may be changed to "f(i) > max_{L≤i≤M}f(i)", and "f(i) > max_{L≤i≤M}f(i)" in line 05 may be changed to "f(i) < min_{L≤i≤M}f(i)".

### (S3: New Leg Registration Process)

The leg extraction unit 12 takes as input the value f(i) and the leg list LL which is stored in the leg storage unit 13, and registers a new extension leg with the leg list LL.

In Fig. 12, line 16 to line 20 present the contents of the new leg registration process.

The leg extraction unit 12 checks whether or not the terminal point M of every extension leg of the leg list LL is time point i - 2 or less (line 16). If true in line 16, the leg extraction unit 12 checks whether or not f(i) > f(i - 1) or f(i) < f(i - 1) is satisfied (line 17). If true in line 17, where f(i) > f(i - 1) is satisfied, the leg extraction unit 12 registers f(i - 1 : i) with the leg list LL as an extension rising leg; where f(i) < f(i - 1) is satisfied, the leg extraction unit 12 registers f(i - 1 : i) with the leg list LL as a falling extension leg (line 18). Then, if sentences starting at line 16 and line 17 end (line 19 to 20).

### (S4: Left-Maximization Process)

The leg extraction unit 12 takes as input the value f(i), time window W, amplitude A, and leg list LL, and updates the leg list LL such that the amplitude of each leg in the leg list LL is A or more and satisfies the left-maximum properties.

Fig. 13 illustrates the contents of the left-maximization process. Of Fig. 13, line 01 to line 17 express the contents of the process for the extension rising leg, and line 18 to line 20 express the process for the extension falling leg.

The leg extraction unit 12 extracts extension rising legs Lj = f(L : M) from the leg list LL sequentially and executes the process of line 02 to line 11 as follows for each extracted extension rising leg Lj (line 01).

The leg extraction unit 12 checks whether or not the start point L of the extension rising leg Lj is i - W (line 02). If true in line 02, the start point of the extension rising leg Lj falls outside the processing target range. Hence, the leg extraction unit 12 deletes the extension rising leg Lj (line 03).

Subsequently, the leg extraction unit 12 checks whether or not the amplitude of an extension rising leg f(L + 1 : M) formed by shifting the start point L of the extension rising leg Lj to the next time point is smaller than the given amplitude A (line 04).

If true in line 04, the leg extraction unit 12 checks whether or not an extension disable flag has been added to the extension rising leg Lj (line 05). If true in line 05, the extension rising leg f(L + 1 : M) formed by shifting the start point L of the extension rising leg Lj to the next time point may have an amplitude A or more afterward. Hence, the leg extraction unit 12 registers the extension rising leg f(L + 1 : M) with the leg list LL (line 06). Then, an if sentence starting at line 05 ends (line 07).

If false in line 04 (line 08), the leg extraction unit 12 checks whether or not f(L + 1) < f(L + 2) is satisfied (line 09). If true in line 09, the left-maximum properties are satisfied provided that the time point of L + 1 is the start point. Thus, the leg extraction unit 12 registers the extension rising leg f(L + 1 : M) with the leg list LL (line 10). On the other hand, if false in line 09, the leg extraction unit 12 searches for the earliest (leftmost) k that satisfies L + 1 < k and f(k - 1) > f(k), thereby searching for a start point k that satisfies the left-maximum properties (line 12). The leg extraction unit 12 registers f(k : M) with the leg list LL independently of the extension rising leg Lj (line 13). Then, **if** sentences starting with line 02, line 4, and line 09 end (lines 14 to 16). When the process of line 02 to line 16 for every extension rising leg Lj registered with the leg list LL ends, a **for** sentence starting at line 01 ends (line 17).

Subsequently, the leg extraction unit 12 executes a process for an extension falling leg (lines 18 to 20). As described above, the process for the extension falling leg is almost the same as the process for the extension rising leg, and its detailed description will accordingly be omitted. In the process for the extension falling leg, "f(L + 1) < f(L + 2)" in line 09 in the process for the extension rising leg may be changed to "f(L + 1) > f(L + 2)", and "f(k - 1) > f(k)" in line 12 may be changed to "f(k - 1) < f(k)".

### (S5: Vibration Path Identification Process)

The appearance pattern identification unit 14 chooses an extension rising leg having an amplitude A or more and an extension falling leg having an amplitude A or more, alternately from among the legs registered with the leg list LL, with a higher priority to a leg having an earlier terminal point. As a result, a terminal time point leftmost vibration path can be obtained. The appearance pattern identification unit 14 outputs a vibration count g(i) of the obtained terminal time point leftmost vibration path.

When the value of the time-series data newly arrives, the process is returned to S1, and the same process is repeated.

For example, assume that in S1, the value for 10 o'clock 20 minutes arrives and subsequence data f(10 o'clock 1 minute : 10 o'clock 20 minutes) of from 10 o'clock 1 minute to 10 o'clock 20 minutes is segmented, and that the process of S2 to S4 is executed. Then, when the value for 10 o'clock 21 minutes arrives, the process is returned to S1 again. Subsequence data f(10 o'clock 2 minutes : 10 o'clock 21 minutes) of from 10 o'clock 2 minutes to 10 o'clock 21 minutes is segmented, and the process of S2 to S4 is executed.

The process of S1 to S5 is repeated for each i of i = W, ..., N, and vibration sequence data g[1 : N - W + 1] being a set of vibration counts g(i) is generated.

As described above, the time-series data processing device 10 according to Embodiment 1 extracts extension legs from the time-series data, and identifies an appearance pattern in which an extension rising leg and an extension falling leg appear alternately over time, from the extracted extension legs. As a result, the vertical vibration of the values of time-series data whose vibration count is difficult to obtain by Fourier transform or the like can be detected accurately. Therefore, an abnormality and the like can be detected accurately.

With a simple sine function, a value as the result of dividing by 4 a vibration count obtained by the time-series data processing device 10 corresponds to a vibration count (frequency) obtained by Fourier transform. It should be noted that with Fourier transform, a function that relates the amplitude to the vibration count for each time window is obtained, while with the time-series data processing device 10, a function that inversely relates the vibration count to the amplitude is obtained.

Vertical vibration can also be detected when the vertical displacement widths from the average value are not uniform or when the average value does not converge, which cases being difficult to deal with in accordance with the method described in Patent Literature 1.

In the process illustrated in Fig. 11 to Fig. 13, each time a new value of time-series data arrives, the leg list is updated by editing the already extracted extension legs, instead of extracting extension legs from the beginning all over again. Therefore, the process concerning extension leg extraction is carried out efficiently.

The vibration path having the maximum vibration count can be identified by only identifying the terminal time point leftmost vibration path. Therefore, the process concerning extension leg extraction is carried out efficiently.

In the above description, the extension rising leg is defined based on the maximum value and the minimum value. Alternatively, it may be possible to define the extension rising leg as having "such a value at that time point whose difference from the maximum value of up to that time point is smaller than a predetermined value k (first reference value)". It may also be possible to define the extension rising leg as having "such a value at that time point whose difference from the minimum value of up to that time point is larger than a predetermined value (first reference value)".

For example, when defining the extension rising leg f[L : M] as having "such a value at that time point whose difference from the maximum value of up to that time point is smaller than the predetermined value k", the extension rising leg fIL : M] is defined as satisfying (max_{L≤j≤i}f(j) - k) ≤ f(i) for every i that satisfies L ≤ i≤ M.

Note that a case where the predetermined value k is 0 corresponds to the leg and a case where k is infinite corresponds to the extension rising leg described above. Namely, the predetermined value k designates the size of the leg that is moving downward in the rising leg. That is, the predetermined value k designates the degree of distance from the monotone increasing function. If the extension rising leg is defined more strongly in terms of the monotonic increasing properties, the process for obtaining the vibration count can be accelerated.

The extension falling leg can be defined in the same manner.

For example, when defining the extension falling leg f[L : M] as having "such a value at that time point whose difference from the minimum value of up to that time point is smaller than the predetermined value k (second reference value)", the extension falling leg f[L : M] is defined as satisfying (min_{L≤j≤i}f(j) + k) ≥ f(i) for every i that satisfies L ≤ i ≤ M.

In the above description, the appearance pattern identification unit 14 identifies an appearance pattern in which an extension rising leg and an extension falling leg appear alternately over time. The appearance pattern identification unit 14 can also identify other appearance patterns of the extension leg such as one in which three extension rising legs appear consecutively.

For example, the appearance pattern identification unit 14 defines the extension leg appearance pattern as a reference pattern in a regular expression or the like using the automata theory being a known technique in computer science. Then, an extension leg appearance pattern coinciding with the defined reference pattern may be detected.

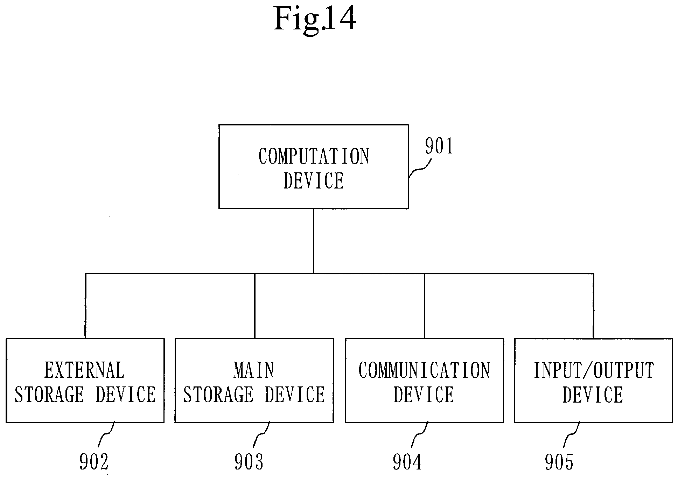

Fig. 14 is a diagram illustrating an example of a hardware configuration of the time-series data processing device 10 presented in Embodiment 1.

The time-series data processing device 10 is a computer. The individual elements of the time-series data processing device 10 can be implemented by programs.

The time-series data processing device 10 has a hardware configuration in which a computation device 901, an external storage device 902, a main storage device 903, a communication device 904, and an input/output device 905 are connected to a bus.

The computation device 901 is a CPU (Central Processing Unit) which executes the programs. The external storage device 902 is, for example, a ROM (Read Only Memory), a flash memory, or a hard disk device. The main storage device 903 is, for example, a RAM (Random Access Memory). The communication device 904 is, for example, a communication board. The input/output device 905 is, for example, a mouse, a keyboard, or a display device.

The programs are usually stored in the external storage device 902. The programs as loaded in the main storage device 903 are sequentially read and executed by the computation device 901.

The programs are those that implement the functions explained as the period data generation unit 11, the leg extraction unit 12, and the appearance pattern identification unit 14.

Furthermore, the external storage device 902 also stores an operating system (OS). At least part of the OS is loaded to the main storage device 903. The computation device 901, while executing the OS, executes the programs.

In the description of Embodiment 1, the leg list, the time-series data, the subsequence data, the vibration sequence data, and so on are stored, in the form of files, in the main storage device 903.

The configuration of Fig. 14 merely presents an example of the hardware configuration of the time-series data processing device 10. The hardware configuration of the time-series data processing device 10 is not limited to the configuration illustrated in Fig. 14, but can be different.

### Reference Signs List

10: time-series data processing device; 11: period data generation unit; 12: leg extraction unit; 13: leg storage unit; 14: appearance pattern identification unit

## Claims

1. A time-series data processing device (10) comprising:
a leg extraction unit (12) configured to take as input time-series data being a sequence of sensor values sequentially obtained from a control system over time, and to extract, as an extension leg, subsequence data which is segmented from the time-series data and in which a value at a terminal point is higher or lower than a value at a start point; and
an appearance pattern identification unit (14) configured to identify, from the extension leg extracted by the leg extraction unit, a suite of extension legs where an extension rising leg in which a value at a terminal point is higher than a value at a start point, and an extension falling leg in which a value at a terminal point is lower than a value at a start point, appear in an order of a reference pattern;
wherein
the extension rising leg is subsequence data in which a value at each time point between a start point and a terminal point is equal to or higher than a value at the start point and equal to or lower than a value at the terminal point, and
the extension falling leg is subsequence data in which a value at each time point between a start point and a terminal point is equal to or lower than a value at the start point and equal to or higher than a value at the terminal point; wherein the appearance pattern identification unit is configured to identify a suite of extension legs where an extension rising leg and an extension falling leg appear alternately and **characterized in that** for each extension rising leg and each extension falling leg of the suite of extension legs, a difference between a value at a terminal point and a value at a start point of the leg is equal to or higher than a given amplitude A wherein the appearance pattern identification unit is configured to identify a suite of extension legs which includes a largest number of extension rising legs and a largest number of extension falling legs.

2. The time-series data processing device according to claim 1, wherein the appearance pattern identification unit is configured to identify the suite of extension legs which includes the largest number of extension rising legs and the largest number of extension falling legs, by alternately identifying an extension rising leg having an earliest terminal point among extension rising legs in each of which a difference between a value at a terminal point and a value at a start point, is equal to or higher than the amplitude A, and an extension falling leg having an earliest terminal point among extension falling legs in each of which a difference between a value at a terminal point and a value at a start point thereof, is equal to or higher than the amplitude A.

3. The time-series data processing device according to claim 2, wherein the leg extraction unit is configured to extract only an extension rising leg being an extension leg in which a value at a time point following a terminal point of the extension leg is lower than a value at the terminal point and a value at a start point of the extension leg is lower than a value at a time point preceding the start point, and an extension falling leg being an extension leg in which a value at a time point following a terminal point of the extension leg is higher than a value at the terminal point and a value at a start point of the extension leg is higher than a value at a time point preceding the start point.

4. The time-series data processing device according to any one of claims 1 to 3, further comprising
a period data generation unit (11) which, upon reception of a value at a new time point, is configured to generate, as the time-series data, a suite of values of since a time point preceding a reference period until the new time point.

5. A computer implemented method for time-series data processing comprising:
a leg extraction process of taking as input time-series data being a sequence of sensor values sequentially obtained from a control system over time, and extracting, as an extension leg, subsequence data which is segmented from the time-series data and in which a value at a terminal point is higher or lower than a value at a start point; and
an appearance pattern identification process of identifying, from the extension leg extracted by the leg extraction process, a suite of extension legs where an extension rising leg in which a value at a terminal point is higher than a value at a start point, and an extension falling leg in which a value at a terminal point is lower than a value at a start point, appear in an order of a reference pattern;
wherein
the extension rising leg is subsequence data in which a value at each time point between a start point and a terminal point is equal to or higher than a value at the start point and equal to or lower than a value at the terminal point, and
the extension falling leg is subsequence data in which a value at each time point between a start point and a terminal point is equal to or lower than a value at the start point and equal to or higher than a value at the terminal point;
wherein the appearance pattern identification process comprises identifying a suite of extension leg where an extension rising leg and an extension falling leg appear alternately and
**characterized in that** for each extension rising leg and each extension falling leg of the suite of extension legs, a difference between a value at a terminal point and a value at a start point of the leg is equal to or higher than a given amplitude A;
wherein the appearance pattern identification process comprises identifying a suite of extension legs which includes a largest number of extension rising legs and a largest number of extension falling legs.

## Patentansprüche

1. Vorrichtung (10) zur Verarbeitung von Zeitreihendaten, umfassend:
eine Schenkelextraktionseinheit (12), dazu ausgestaltet, als Input Zeitreihendaten zu nehmen, die eine Sequenz von Sensorwerten sind, die im Laufe der Zeit nacheinander von einem Steuersystem erhalten wurden, und um, als einen Erweiterungsschenkel, Teilsequenzdaten, die aus den Zeitreihendaten segmentiert sind und in denen ein Wert an einem Abschlusspunkt höher oder niedriger als ein Wert an einem Startpunkt ist, zu extrahieren; und
eine Einheit (14) zur Identifizierung von Erscheinungsmustern, dazu ausgestaltet, von dem durch die Schenkelextraktionseinheit extrahierten Erweiterungsschenkel einen Satz von Erweiterungsschenkeln zu identifizieren, wobei ein ansteigender Erweiterungsschenkel, in dem ein Wert an einem Abschlusspunkt höher ist als ein Wert an einem Startpunkt, und ein abfallender Erweiterungsschenkel, in dem ein Wert an einem Abschlusspunkt niedriger ist als ein Wert an einem Startpunkt, in einer Reihenfolge eines Referenzmusters erscheinen;
wobei
der ansteigende Erweiterungsschenkel Teilsequenzdaten sind, in denen ein Wert zu jedem Zeitpunkt zwischen einem Startpunkt und einem Abschlusspunkt gleich groß wie oder größer als ein Wert an dem Startpunkt und gleich groß wie oder kleiner als ein Wert an dem Abschlusspunkt ist, und
der abfallende Erweiterungsschenkel Teilsequenzdaten sind, in denen ein Wert zu jedem Zeitpunkt zwischen einem Startpunkt und einem Abschlusspunkt gleich groß wie oder kleiner als ein Wert am Startpunkt und gleich groß wie oder größer als ein Wert am Abschlusspunkt ist; wobei die Einheit zur Identifizierung von Erscheinungsmustern dazu ausgestaltet ist, einen Satz von Erweiterungsschenkeln zu identifizieren, wobei ein ansteigender Erweiterungsschenkel und ein abfallender Erweiterungsschenkel abwechselnd erscheinen, und **dadurch gekennzeichnet, dass** für jeden ansteigenden Erweiterungsschenkel und jeden abfallenden Erweiterungsschenkel des Satzes von Erweiterungsschenkeln eine Differenz zwischen einem Wert an einem Abschlusspunkt und einem Wert an einem Startpunkt des Schenkels gleich groß wie oder größer als eine gegebene Amplitude A ist,
wobei die Einheit zur Identifizierung von Erscheinungsmustern dazu ausgestaltet ist, einen Satz von Erweiterungsschenkeln zu identifizieren, der eine größte Anzahl von ansteigenden Erweiterungsschenkeln und eine größte Anzahl von abfallenden Erweiterungsschenkeln umfasst.

2. Vorrichtung zur Verarbeitung von Zeitreihendaten nach Anspruch 1, wobei die Einheit zur Identifizierung von Erscheinungsmustern dazu ausgestaltet ist, den Satz von Erweiterungsschenkeln zu identifizieren, der die größte Anzahl von ansteigenden Erweiterungsschenkeln und die größte Anzahl von abfallenden Erweiterungsschenkeln umfasst, durch abwechselndes Identifizieren eines ansteigenden Erweiterungsschenkels mit einem frühesten Abschlusspunkt unter ansteigenden Erweiterungsschenkeln, von denen in jedem eine Differenz zwischen einem Wert an einem Abschlusspunkt und einem Wert an einem Startpunkt gleich groß wie oder größer als die Amplitude A ist, und eines abfallenden Erweiterungsschenkels mit einem frühesten Abschlusspunkt unter abfallenden Erweiterungsschenkeln, von denen in jedem eine Differenz zwischen einem Wert an einem Abschlusspunkt und einem Wert an einem Startpunkt davon gleich groß wie oder größer als die Amplitude A ist.

3. Vorrichtung zur Verarbeitung von Zeitreihendaten nach Anspruch 2, wobei Schenkelextraktionseinheit dazu ausgestaltet ist, nur einen ansteigenden Erweiterungsschenkel zu extrahieren, der ein Erweiterungsschenkel ist, in dem ein Wert zu einem Zeitpunkt nach einem Abschlusspunkt des Erweiterungsschenkels kleiner als ein Wert am Abschlusspunkt ist, und ein Wert an einem Startpunkt des Erweiterungsschenkels niedriger als ein Wert zu einem dem Startpunkt vorausgehenden Zeitpunkt ist, und ein abfallender Erweiterungsschenkel ein Erweiterungsschenkel ist, in dem ein Wert zu einem Zeitpunkt nach einem Abschlusspunkt des Erweiterungsschenkels höher ist als ein Wert am Abschlusspunkt, und ein Wert an einem Startpunkt des Erweiterungsschenkels höher ist als ein Wert zu einem dem Startpunkt vorausgehenden Zeitpunkt.

4. Vorrichtung zur Verarbeitung von Zeitreihendaten nach einem der Ansprüche 1 bis 3, ferner umfassend
eine Einheit (11) zum Generieren von Periodendaten, die dazu ausgestaltet ist, bei Empfang eines Wertes zu einem neuen Zeitpunkt als die Zeitreihendaten einen Satz von Werten seit einem Zeitpunkt, der einem Referenzzeitraum vorausgeht, bis zu dem neuen Zeitpunkt zu generieren.

5. Computerimplementiertes Verfahren zur Verarbeitung von Zeitreihendaten, umfassend:
einen Schenkelextraktionsprozess des Nehmens von Zeitreihendaten als Input, die eine Sequenz von Sensorwerten sind, die im Laufe der Zeit nacheinander von einem Steuersystem erhalten wurden, und des Extrahierens, als einen Erweiterungsschenkel, von Teilsequenzdaten, die aus den Zeitreihendaten segmentiert sind und in denen ein Wert an einem Abschlusspunkt höher oder niedriger als ein Wert an einem Startpunkt ist; und
einen Prozess zur Identifizierung von Erscheinungsmustern, um von dem durch den Schenkelextraktionsprozess extrahierten Erweiterungsschenkel einen Satz von Erweiterungsschenkeln zu identifizieren, wobei ein ansteigender Erweiterungsschenkel, in dem ein Wert an einem Abschlusspunkt höher ist als ein Wert an einem Startpunkt, und ein abfallender Erweiterungsschenkel, in dem ein Wert an einem Abschlusspunkt niedriger ist als ein Wert an einem Startpunkt, in einer Reihenfolge eines Referenzmusters erscheinen;
wobei
der ansteigende Erweiterungsschenkel Teilsequenzdaten sind, in denen ein Wert zu jedem Zeitpunkt zwischen einem Startpunkt und einem Abschlusspunkt gleich groß wie oder größer als ein Wert an dem Startpunkt und gleich groß wie oder kleiner als ein Wert an dem Abschlusspunkt ist, und
der abfallende Erweiterungsschenkel Teilsequenzdaten sind, in denen ein Wert zu jedem Zeitpunkt zwischen einem Startpunkt und einem Abschlusspunkt gleich groß wie oder kleiner als ein Wert an dem Startpunkt und gleich groß wie oder größer als ein Wert an dem Abschlusspunkt ist;
wobei der Prozess zur Identifizierung von Erscheinungsmustern das Identifizieren eines Satzes von Erweiterungsschenkeln umfasst, wobei ein ansteigender Erweiterungsschenkel und ein abfallender Erweiterungsschenkel abwechselnd erscheinen, und
**dadurch gekennzeichnet, dass** für jeden ansteigenden Erweiterungsschenkel und jeden abfallenden Erweiterungsschenkel aus dem Satz von Erweiterungsschenkeln eine Differenz zwischen einem Wert an einem Abschlusspunkt und einem Wert an einem Startpunkt des Schenkels gleich groß wie oder größer als eine gegebene Amplitude A ist;
wobei der Prozess zur Identifizierung von Erscheinungsmustern das Identifizieren eines Satzes von Erweiterungsschenkeln umfasst, der eine größte Anzahl von ansteigenden Erweiterungsschenkeln und eine größte Anzahl von abfallenden Erweiterungsschenkeln umfasst.

## Revendications

1. Dispositif de traitement de données par séries chronologiques (10) comprenant :
une unité d'extraction de flanc (12) conçue pour prendre, en tant qu'entrée, des données qui sont une séquence de valeurs de capteur obtenues de manière séquentielle à partir d'un système de contrôle au cours du temps et pour extraire, en tant que flanc d'extension, des données de sous-séquence qui sont segmentées à partir des données des séries chronologiques et dans lesquelles une valeur à un point terminal est supérieure à une valeur à un point initial ; et
une unité d'identification de motif d'apparence (14) conçu pour identifier, à partir du flanc d'extension extrait par l'unité d'extraction de flanc, d'une suite de flancs d'extension dans lesquelles un flanc d'extension ascendant dans lequel une valeur à un point terminal est supérieure à une valeur à un point initial et un flanc d'extension descendant dans laquelle une valeur à un point terminal est inférieure à une valeur à un point initial, apparaissent dans l'ordre d'un motif d'apparence ;
dans lequel
le flanc d'extension ascendant est constitué de données de sous-séquence dans lesquelles une valeur à chaque point temporel entre un point initiale et un point terminal est supérieure ou égale à une valeur au point initial et inférieure ou égale à une valeur au point terminal et
le flanc d'extension descendant est constitué de données de sous-séquence dans lesquelles une valeur à chaque point temporel entre un point initial et un point terminal est inférieure ou égale à une valeur au point initial et supérieure ou égale à une valeur au point terminal ; dans lequel l'unité d'identification de motif d'apparence est conçue pour identifier une suite de flancs d'extension, où un flanc d'extension ascendant et un flanc d'extension descendant apparaissent alternativement et **caractérisé en ce que**, pour chaque flanc d'extension ascendant et chaque flanc d'extension descendant de la suite de flancs d'extension, une différence entre une valeur à un point terminal et une valeur à un point initial du flanc est supérieure ou égale à une amplitude donnée A
dans lequel l'unité d'identification de motif d'apparence est conçue pour identifier une suite de flancs d'extension qui comprend le nombre le plus grand de flancs d'extension ascendants et le nombre le plus grand de flancs d'extension descendants.

2. Dispositif de traitement de données par séries chronologiques selon la revendication 1, dans lequel l'unité d'identification de motif d'apparence est conçue pour identifier la suite de flancs d'extension qui comprend le nombre le plus grand de flancs d'extension ascendants et le nombre le plus grand de flancs d'extension descendants, en identifiant alternativement un flanc d'extension ascendant ayant un point terminal le plus précoce parmi des flancs d'extension ascendants dans chacun desquels une différence entre une valeur à un point terminal et une valeur à un point initial est supérieure ou égale à l'amplitude A et un flanc d'extension descendant ayant un point terminal le plus précoce parmi des flancs d'extension descendants dans chacun desquels une différence entre une valeur à un point terminal et une valeur à un point initial est supérieure ou égale à l'amplitude A.

3. Dispositif de traitement de données par séries chronologiques selon la revendication 2, dans lequel l'unité d'extraction de flanc est conçue pour extraire uniquement un flanc d'extension ascendant qui est un flanc d'extension dans lequel une valeur à point temporel suivant un point terminal du flanc d'extension est inférieure à une valeur au point terminal et une valeur à un point initial du flanc d'extension est inférieure à une valeur à point temporel précédant le point initial et un flanc d'extension descendant étant un flanc d'extension dans lequel une valeur à un point temporel suivant un point terminal du flanc d'extension est supérieure à une valeur au point terminal et une valeur à un point initial du flanc d'extension est supérieure à une valeur à un point temporel précédant le point initial.

4. Dispositif de traitement de données par séries chronologiques selon l'une des revendications 1 à 3, comprenant en outre
une unité de génération de données périodiques (11) qui, lors de la réception d'une valeur à un nouveau point temporel, est conçue pour générer, en tant que données de séries chronologiques, une suite de valeurs depuis un point temporel précédant une période de référence jusqu'au nouveau point temporel.

5. Procédé assisté par ordinateur pour le traitement de données par séries chronologiques, comprenant :
un processus d'extraction de flanc permettant de prendre, comme entrée, des données par séries chronologiques qui sont une séquence de valeurs de capteurs obtenues de manière séquentielle à partir d'un système de contrôle au cours du temps et d'extraire, en tant que flanc d'extension, des données de sous-séquence qui sont segmentées à partir des données des séries chronologiques et dans lesquelles une valeur à un point terminal est supérieure ou inférieure à une valeur à un point initial ; et
un processus d'identification de motif d'apparence pour l'identification, à partir du flanc d'extension extrait par le processus d'extraction de flanc, d'une suite de flancs d'extension dans lesquels un flanc d'extension ascendant dans lequel une valeur à un point terminal est supérieure à une valeur à un point initial et un flanc d'extension descendant dans lequel une valeur à un point terminal est inférieure à une valeur à un point initial, apparaissent dans l'ordre d'un motif d'apparence ;
dans lequel
le flanc d'extension ascendant est constitué de données de sous-séquence dans lesquelles une valeur à chaque point temporel entre un point initiale et un point terminal est supérieure ou égale à une valeur au point initial et inférieure ou égale à une valeur au point terminal et
le flanc d'extension descendant est constituée de données de sous-séquence dans lesquelles une valeur à chaque point temporel entre un point initial et un point terminal est inférieure ou égale à une valeur au point initial et supérieure ou égale à une valeur au point terminal ;
dans lequel le processus d'identification de motif d'apparence comprend l'identification d'une suite de flancs d'extension dans laquelle un flanc d'extension ascendant et un flanc d'extension descendant apparaissent alternativement et
**caractérisé en ce que**, pour chaque flanc d'extension ascendant et chaque flanc d'extension descendant de la suite de flancs d'extension, une différence entre une valeur à un point terminal et une valeur à un point initial du flanc est supérieure ou égale à une amplitude donnée A ;
dans lequel le processus d'identification de motif d'apparence comprend l'identification d'une suite de flancs d'extension qui comprend le nombre le plus grand de flancs d'extension ascendants et le nombre le plus grand de flancs d'extension descendants.
